# EUROPEAN PATENT SPECIFICATION

(11) **EP 0 952 188 B1**
(45) Date of publication and mention of the grant of the patent: **30.07.2003**
(21) Application number: 99201237.7
(22) Date of filing: 22.04.1999
(51) Int. Cl.: C08L 95/00, E01C 7/26

(54) **Bituminous aggregate compounds, and process for its production**
Bituminöses Mischgut und Verfahren zu seiner Herstellung
Enrobés bitumineux et leur méthode de préparation

(30) Priority: 22.04.1998 IT MI980856
(43) Date of publication of application: 27.10.1999
(73) Proprietor: Biardi, Giuseppe, I-21046 Malnate, Varese (IT); Luciani, Barbara, 21100 Varese (IT); Pellicioli, Paolo, 21100 Varese (IT)
(72) Inventor: Biardi, Giuseppe, I-21046 Malnate, Varese (IT); Luciani, Barbara, 21100 Varese (IT); Pellicioli, Paolo, 21100 Varese (IT)
(74) Representative: De Gregori, Antonella

(56) References cited:
- EP-A- 0 439 232
- FR-A- 2 512 827
- FR-A- 2 580 658
- GB-A- 1 407 229
- US-A- 5 385 401

## Description

In roadbuilding techniques, it is foreseen that there is 8-12 cm of bituminous aggregate comprising aggregate of uniform size or even demolition materials reduced to a suitable size and bonded by bitumen is foreseen on top of the stone sub-base.

This bituminous aggregate is prepared on production sites, then shipped hot to the roadworks site, laid and rolled. The top course or wearing course, which has a finer granulometry, is then laid, sometimes with an intermediate course being laid between them. The quantities of bituminous aggregate required are appreciable, bearing in mind all new roadbuilding and the resurfacing and maintenance of existing road surfaces. Bitumen and stone consumption is likewise appreciable, even if the above-mentioned recycling of demolition materials broken into small pieces matching the size of the stone implies at one and the same time a smaller removal of natural materials from the environment and a recovery of materials that have already been used, avoiding their disposal in landfill.

Fr-A-2 512 827 discloses a binder composition based on the mixture of bitumen, caoutchouc in the amount of 15 to 35% by weight and carbonate particles.

Fr-A-2 580 658 discloses a composition comprising caoutchouc in an amount of 10 to 40% by weight, a synthetic elastomer in an amount of 0,5 to 3% by weight, an oil cut containing naphtenic and aromatic compounds in an amount of 3 to 15% by weight and the remaining being bitumen.

GB-A- 1 407 229 describes a roadway asphalt surface structure comprising an asphalt aggregate surface layer, a base and an intermediate layer wherein said intermediate layer comprises from 30 to 60% by volume of ground vulcanized rubber, from 20% to 50% by volume of fine mineral aggregate and from 15 to 35% of asphalt, having a viscoelastic extensibility of the intermediate layer being from 600 to 1200% greater than that of the surface layer.

US patent No. 5 385 401 discloses a method of incorporating used tire scrap into asphalt comprising saturating rubber particles with an aromatic oil. The rubber particle containing oil does not absorb additional oils from the asphalt binder materials and the integrity of the asphalt mix is not compromised.

EP-A-439 232 discloses a method for preparing a bitumen-based mixture by mixing 75-85% bitumen 15-20% rubber and 1-5% oil and subjecting the mixture to a three steps heating.

According to this invention, it is desirable to make available a bituminous aggregate compound for forming the base course of the type comprising at least one inert stone material, such as aggregate, bonded with bitumen which could be particularly suitable as regards the use of recycled materials in such a compound and also to give improved characteristics to the said road base course. In this instance we are referring in particular to improved resistance to deformation under load and improved elasticity characteristics of the road sub-base.

Moreover, it is desirable that the compound in accordance with the invention allows the production of a cheaper road sub-base.

To achieve these aims and other benefits which will become more apparent in the following description, the invention proposes a bituminous aggregate-based compound the use thereof and a process for its in accordance for forming the road base course, with claims 1-12.

In one particularly favoured form of this invention, the above-mentioned small pieces of rubber, e.g. in granules, are obtained by shredding used tyres.

This represents an initial benefit since the disposal of used tyres currently constitutes a very serious problem. Indeed, apart from the landfill disposal of tyres such as was done in the past, but which can hardly be proposed today due to the considerable waste of space together with their high specific volume, current processing lines make provision for breaking up the tyres themselves, the separating out of the iron, textiles and rubber and use of the different fractions.

There are various recycling possibilities for the iron (uniform steel) and also for the textiles, but as far as the rubber is concerned, the problem has still not been substantially resolved due to the large volumes produced on an annual basis.

Small recoveries of tyre powder have been made by the production of some manufactured goods, such as the use of strips for making doormats, but the quantities used for this use are very small compared with the product's overall availability.

Besides disposing of the fragments in landfill, with an obvious space saving compared with the tyre itself, burning small rubber pieces and making use of its energy content in power stations is foreseen and has been partly achieved on a demonstration plant scale.

There are still doubts from the financial point of view about the validity of the recovery line for at least two reasons: on the one hand the energy input for crushing the rubber to the required size for fluidised bed combustion and, on the other, the effect on the overall cost of the plant of the dust precipitator and sulphur dioxide units downstream of the burner.

In accordance with the aims of this invention, studies were undertaken with the intention of finding suitable proportions and sizes for the rubber pieces, as well as appropriate operating conditions for the bituminous aggregate production plant to obtain a course with better use characteristics than the conventional course.

Tests were carried out on the physical and mechanical properties of various bituminous aggregate samples containing rubber pieces, with satisfactory results compared with the specification values normally imposed by standards.

According to the invention, the dimensions of the rubber and inert stony material in the proposed compound must be essentially similar, i.e. comparable and uniform. This means that the ratio of voids to fill in the aggregate remains essentially unchanged so the liquid bitumen can penetrate and occupy the spaces allowing the solid matrix to be bound in a consistent manner. Pieces of rubber that are too small or too large reduce the amount of voids occurring between the stony material. For example, for base courses for which ANAS specifications stipulate inert stony material with a granulometry up to 38 mm, with a prevalence of fractions from 9 to 25 mm, the size of the rubber shall be between 10 and 25 mm. More generally the corresponding granulometric plots must be superimposable.

Mechanical characteristics (resistance and elasticity modulus) must be kept under control; for a conventional aggregate these are dependent on the granulometric plot of the inert stony material, the presence of fill material (filler), the relative quantity of bitumen and the grade of the bitumen itself. The addition of rubber fragments may change such characteristics; a hypothetical aggregate in which rubber replaced all the stony material would give an elastic matrix well bonded by the bitumen, but with unacceptable characteristics for a road. With low rubber contents the dispersion between the rubber pieces is increased; the solid stone matrix is replaced here and there by elastic pieces of rubber, increasing elasticity without substantially altering the mechanical properties. However, above a critical weight volume of rubber the matrix loses its uniformity since aggregation of the rubber particles prevails (clumping), its volumetric distribution is altered and performance falls off. These phenomena are accentuated if the pieces have different dimensions from those of the stone material and if they are too small bitumen distribution would also not be uniform. In relation to that of the inert stone, the percentage by weight of rubber must be less than 10% and preferably between 2.0 and 5% to optimise the physical and mechanical characteristics of bituminous aggregates.

According to the invention the mechanical characteristics of the road base course laid with an inventive compound are compatible with the requirements of conventional specifications; it may nevertheless be observed how the use of rubber granules allows the bitumen content to be reduced slightly (i.e. the material that has the highest unit price) and also the density of the bituminous aggregate.

The above-mentioned bulk, or filler, is generally inorganic and chosen from amongst the silicates, carbonates or other similar bulk materials.

These advantages will be described below with reference to the examples outlined, which must not be considered as restrictive, but merely illustrative of the invention.

### Example 1

Bituminous aggregate-based compounds for forming the road base course are prepared in the following manner; damp stony material (crushed stone) is loaded into a rotary oven together with a filler at a temperature of between 150 and 190° C to carry out its drying. The dry mass is then fed to a drum.

Liquid bitumen is added here by mixing until a homogenous aggregate is obtained.

Cold pieces of rubber are fed into the same plant, together with any other components until the hot bituminous aggregate to be sent for roadbuilding is obtained after careful mixing.

The granulometric analyses of the rubber granules and bituminous aggregate used in the examples in question are set out below, as well as the data for four samples, of which numbers 1 and 2 are without rubber and numbers 3 and 4 in accordance with the invention, i.e. with the addition of pieces of rubber, whose quantity comprises 2% of the total weight of the compound.

### a) Rubber granules

### Granulometric analyses

| **Sieves (%)** | **ASTM** | **(mm)** | **Percentage passing through** |
|---|---|---|---|
| | 1 | (25.4) | 100 |
| | 3/4 | (19.1) | 98 |
| | 1/2 | (12.7) | 93 |
| | 3/8 | (9.52) | 76 |
| | 1/4 | (6.35) | 30 |
| | no. 4 | (4.76) | 15 |
| | 10 | (2) | 1 |
| | 40 | (0.42) | 0 |

### b) Bituminous aggregate

**1) Percentage of bitumen cf. weight of inert materials (%) 4.2**
**2) Granulometric analyses of the inert extracts**

| **Sieves (%)** | **ASTM** | **(mm)** | **Percentage passing through** |
|---|---|---|---|
| | 1 | (25.4) | 100 |
| | 3/4 | (19.1) | 96 |
| | 1/2 | (12.7) | 78 |
| | 3/8 | (9.52) | 56 |
| | 1/4 | (6.35) | 46 |
| | no. 4 | (4.76) | 42 |
| | 10 | (2) | 31 |
| | 40 | (0.42) | 12 |
| | 80 | (0.177) | 5 |
| | 200 | (0.074) | 3 |

### c) Details of production of cylindrical specimens, diameter 10.10 cm

- mixing temperature: 160° C
- compacting temperature: 150° C

| **Specimen no. Aggregate type** | **1 without rubber** | **2 without rubber** | **3 with 2% rubber** | **4 with2% rubber** |
|---|---|---|---|---|
| 1) Average height (cm) | 9.49 | 12.34 | 8.90 | 9.35 |
| 2) Weight (g) | 1,740.6 | 2,254.7 | 1,542.0 | 1,666.0 |
| 3) Volume (dm³) | 769 | 1,000 | 721 | 758 |
| 4) Mass by volume (kg/dm3) | 2.26 | 2.25 | 2.14 | 2.19 |
| 5) Perc. residual voids (%) | 9.4 | 9.8 | 14.2 | 12.2 |

### Test results

### a) Rubber granules

1. **Specific gravity:** 1.20 kg/dm³
**2. Granulometric analyses - standards CNR B.U. no: 23/71**

| **Sieves (%)** | **ASTM** | **(mm)** | **Percentage passing through** |
|---|---|---|---|
| | 1 | (25.4) | 100 |
| | 3/4 | (19.1) | 98 |
| | 1/2 | (12.7) | 93 |
| | 3/8 | (9.52) | 76 |
| | 1/4 | (6.35) | 30 |
| | no. 4 | (4.76) | 15 |
| | 10 | (2) | 1 |
| | 40 | (0.42) | 0 |

### b) Bituminous aggregate

**1) Characteristic data for the base conglomerate:**
- percentage of bitumen, cf. weight of inert stone (%) 4.2

**2. Granulometric analyses - standards CNR B.U. no: 23/71**

| **Sieves (%)** | **ASTM** | **(mm)** | **Percentage passing through** |
|---|---|---|---|
| | 1 | (25.4) | 100 |
| | 3/4 | (19.1) | 96 |
| | 1/2 | (12.7) | 78 |
| | 3/8 | (9.52) | 56 |
| | 1/4 | (6.35) | 46 |
| | no. 4 | (4.76) | 42 |
| | 10 | (2) | 31 |
| | 40 | (0.42) | 12 |
| | 80 | (0.177) | 5.0 |
| | 200 | (0.074) | 3 |

**3. Specific gravity of the inert stone:** 2.65 kg/dm³

### c) Comparison between the inert material on its own (specimen no. 5) and the material with 2% by weight rubber granules (specimen no. 6)

**Note**: The rubber was added in the laboratory (at room temperature) mixing it into the base aggregate which had previously been heated at a temperature of 155° C.

Marshall test (75 hammer blows per face) - standards CNR B.U. no. 30/73; test temperature: 60° C.

### c) Details of production of cylindrical specimens, diameter 10.10 cm

- mixing temperature: 160° C
- compacting temperature: 150° C

| **Specimen Mixture** | **5 without rubber** | **6 with 2% rubber** |
|---|---|---|
| - Mixture's specific gravity (kg/dm³) | 2.65 | 2.62 |
| - Density of specimens (kg/dm³) | 2.30 | 2.17 |
| - Perc. residual voids (%) | 7.7 | 12.0 |
| - Stability (kg) | 1,010 | 770 |
| - Flow (mm) | 2.0 | 3.3 |
| - Rigidity (kg/mm) | 505 | 233 |

The compression resistance, maximum load, deformation under maximum load and the modulus of elasticity were measured for the above-mentioned bituminous aggregate specimens identified by numbers 1, 2, 3 and 4. The results obtained are set out below.

### Determination of characteristics

### 1. Compression resistance

Test environment: 23° C/50% RH
Conditioning: 24 hours in test environment
Test speed: 1mm/min

| **Sample dimensions** | **Diameter (mm)** | **Height (mm)** |
|---|---|---|
| Specimen 1 | 101.4 | 95 |
| Specimen 2 | 101.5 | 125 |
| Specimen 3 | 101.5 | 91 |
| Specimen 4 | 101.6 | 94 |

| **1.1 Maximum load** **(*)** | | |
|---|---|---|
| Specimen 1 | MPa 2.3 | |
| Specimen 2 | MPa 1.4 | |
| Specimen 3 | MPa 1.6 | |
| Specimen 4 | MPa 2.7 | |

| **1.2 Deformation at maximum load** **(*)** | | |
|---|---|---|
| Specimen 1 | % 2.1 | |
| Specimen 2 | % 1 | |
| Specimen 3 | % 4 | |
| Specimen 4 | % 3.5 | |

| **1.3 Elasticity modulus** **(**)** | | |
|---|---|---|
| Specimen 1 | MPa 138.5 | |
| Specimen 2 | MPa 145.8 | |
| Specimen 3 | MPa 50.2 | |
| Specimen 4 | MPa 93.4 | |

| | | |
|---|---|---|
| (*) The maximum load and relative deformation were taken from the load/deformation plot at the first point where the load starts to decline. | | |
| (**) The elasticity modulus was plotted in the first section of the curve where the trend of load in relation to deformation has a linear elastic behaviour. | | |

Averaging the above values, we find that:
- resistance measured at maximum load is:
   1.85 MPa for the specimens without rubber
   2.15 MPa for the specimens with rubber
- deformation at maximum load and the elasticity modulus are:
   1.55% and 142.15 MPa for the specimens without rubber
   3.75% and 71.80 MPa for the specimens with rubber.

All the results confirm that, according to the invention, there is no reduction in resistance to compression loads, whilst the elasticity of the bituminous aggregate is essentially doubled.

### Example 2

Comparison of the production costs per aggregate with and without rubber for a road sub-base (conventional) for the samples referred to in Example 1.

The initial bituminous aggregate is the same, i.e.:
- stone material with 4.2% bitumen cf. the weight of inert materials (samples nos. 1, 2 and 5)
- the same material mixed when hot with pieces of rubber in accordance with the invention, at a quantity of 2% by weight of the aggregate (samples nos. 3, 4 and 6).

The average values for the density of the samples are as follows:
2,270 kg/m³ samples without rubber
2,167 kg/m³ samples with 2% rubber.

Reference: road 6 m wide and 1 m long.
Base course thickness: 0.1 m.

Assumed unit costs:

| | |
|---|---|
| - inert stone materials (with max. 30% water) | 28.6 Lit/kg |
| - filler with reference to finished product (3.5%) | 85 Lit/kg |
| - bitumen (80-100) | 300 Lit/kg |
| - rubber | 100 Lit/kg |
| - processing cost | 18 Lit/kg of product |

### SAMPLES 1, 2 & 5 WITHOUT RUBBER:

- Density 2,270
- Weight per 1m of road 1 x 6 x 0.1 x 2,270 = 1,362 kg
- Percentage of bitumen in relation to inert stone material 4.2

| **Breakdown of percentages and costs:** | | | |
|---|---|---|---|
| **%** | **mass (kg)** | **cost** | **(Lit)** |
| - inert stone material | 96 | 1,307.52 | 37,395 |
| - bitumen | 4 | 54.48 | 16,344 |
| - processing cost | | | 24,516 |
| Total mass | | 1,362.00 | |
| Total cost | | | 78,255 Lit/m road |

Cost in relation to kg of product: 57.456 Lit/kg

### SAMPLES 3,4 & 6 WITH RUBBER:

- Density 2,167
- Weight per 1m of road 1 x 6 x 0.1 x 2,167 = 1,300.2 kg
- Percentage of bitumen in relation to inert stone material 4.2

| **Breakdown of percentages and costs:** | | | |
|---|---|---|---|
| **%** | **mass (kg)** | **cost** | **(Lit)** |
| - inert stone material | 94.1 | 1,223.688 | 34,991.763 |
| - bitumen | 4 | 52.008 | 15,602.400 |
| - rubber | 2 | 26.004 | 2,600.400 |
| - processing cost | | | 23,403.600 |
| Total mass | | 1,301.7 | |
| Total cost | | 76,598 Lit/m road | |

Cost in relation to kg of product: 58.913 Lit/kg

From Example 2 it is found that there is a reduction in density of the aggregate with rubber added in equal ratio to the bitumen and stony material.

A further example is given with reference to another benefit of the invention outlined above, i.e. the possibility of reducing the compound costs due a reduction of the component having a major impact on the preparation of the compound (bitumen).

### Example 3

Comparison of production costs for a series of bituminous aggregate specimens with or without rubber.

### SAMPLE 1 WITHOUT RUBBER:

- Density 2,250Kg/m
- Weight per 1m of road 1 x 6 x 0.1 x 2,250 = 1,350 kg
- Percentage of bitumen in relation to inert stone material 5.04
- Percentage of filler in relation to finished product 3.5

| **Breakdown of percentages and costs:** | | | |
|---|---|---|---|
| | **%** | **mass (kg)** | **cost (Lit)** |
| - inert stone material | 91.8 | 1,239.534 | 35,541 |
| - bitumen | 4.7 | 63.216 | 18,965 |
| - filler | 3.5 | 47.250 | 4,016 |
| - processing cost | | | 24,300 |
| Total mass | | 1,350.000 | |
| Total cost | | | 82,732Lit/m road |

Cost in relation to kg of product: 61.28 Lit/kg

### SAMPLE 2 WITHOUT RUBBER:

- Density 2,320 kg/m³
- Mass per lm of road 1 x 6 x 0.1 x 2,320 = 1,392 kg
- Percentage of bitumen in relation to inert stone material 5.25
- Percentage of filler in relation to finished product 3.5

| **Breakdown of percentages and costs:** | | | |
|---|---|---|---|
| | **%** | **mass (kg)** | **cost (Lit)** |
| - inert stone material | 91.7 | 1,276.464 | 36,507 |
| - bitumen | 4.8 | 67.004 | 20,101 |
| - filler | 3.5 | 48.720 | 4,141 |
| - processing cost | | | 25,059 |
| Total mass | | 1,392.188 | |
| Total cost | | | 85,808Lit/m road |

Cost in relation to kg of product: 61.6 Lit/kg

### SAMPLE 3 WITH RUBBER:

- Density 2,180 kg/m³
- Mass per 1m of road 1 x 6 x 0.1 x 2,180 = 1,308 kg
- Percentage of bitumen in relation to inert stone material 3.79
- Percentage of rubber in relation to inert stone material 1.22
- Percentage of filler in relation to finished product 3.5

| **Breakdown of percentages and costs:** | | | |
|---|---|---|---|
| | **%** | **mass (kg)** | **cost (Lit)** |
| - inert stone material | 91.9 | 1,202.00 | 34,377 |
| - bitumen | 3.5 | 45.556 | 13,667 |
| - rubber | 1.1 | 14.664 | 1,466 |
| - filler | 3.5 | 45.780 | 3,891.3 |
| - processing cost | | | 23,544 |
| Total mass | | 1,308.00 | |
| Total cost | | | 76,946Lit/m road |

Cost in relation to kg of product: 58.82 Lit/kg

### SAMPLE 4 WITH RUBBER:

- Density 2,170 kg/m³
- Mass per 1m of road 1 x 6 x 0.1 x 2,170 = 1,302kg
- Percentage of bitumen in relation to inert stone material 3.72
- Percentage of rubber in relation to inert stone material 2.34
- Percentage of filler in relation
- to finished product 3.5

| **Breakdown of percentages and costs:** | | | |
|---|---|---|---|
| | **%** | **mass (kg)** | **cost (Lit)** |
| - inert stone material | 91.0 | 1,184.6 | 33,881 |
| - bitumen | 3.4 | 44.1 | 13,221 |
| - rubber | 2.1 | 27.7 | 2,772 |
| - filler | 3.5 | 45.57 | 3,873 |
| - processing cost | | | 23,436 |
| Total mass | | 1,301.97 | |
| Total cost | | | 77,183Lit/m road |

Cost in relation to kg of product: 59.28 Lit/kg

| | % bitumen | % rubber | Mass (kg) | cost (Lit) |
|---|---|---|---|---|
| Test no. 1 | 4.7 | - | 1,350 | 82,732 |
| Test no. 2 | 4.8 | - | 1,392 | 85,808 |
| Test no. 3 | 3.5 | 1.1 | 1,202 | 76,946 = difference -8,862 |
| Test no. 4 | 3.4 | 2.1 | 1,302 | 77,183 = difference -8,625 |

As can be seen from the data set out in the above table, compared with the standard production bituminous aggregate (samples 1 and 2 without rubber), the addition of small pieces of rubber allows a reduction in the percentage of bitumen and hence a reduction in costs.

## Claims

1. A bituminous aggregate-based compound for forming the road base course comprising a bitumen-bonded inert stone material and rubber particles having substantially the same dimensions as said stone material such that the ratio of voids to fill in said aggregate remains essentially unchanged, **characterised in that** said rubber particles are provided in an amount less than 10% by weight in respect of the inert stone material weight in order to improve the physical and mechanical characteristics.

2. Bituminous aggregate-based compound according to claim 1, **characterised in that** the size of said rubber particles is between 10 and 25 mm.

3. Bituminous aggregated-based compound according to claim 1 or 2, **characterised in that** said rubber particles are provided in an amount between 2 and 5% by weight in respect of the stone weight percentage.

4. Bituminous aggregated-based compound according to anyone of claims 1-3, **characterised in that** said rubber particles are provided in the form of granules.

5. Bituminous aggregated-based compound according to anyone of claims 1-4, **characterised in that** said rubber particles are recovered from old tires.

6. Bituminous aggregated-based compound according to anyone of claims 1-5, wherein the corresponding granulometric plots of said inert stone material and rubber particles are superimposable.

7. Bituminous aggregated-based compound according to anyone of claims 1-6, **characterised in that** said inert stone material is gravel.

8. Bituminous aggregated-based compound according to anyone of claims 1-7, **characterised in that** it further includes pieces of shredded material.

9. Bituminous aggregated-based compound according to anyone of claims 1-7, **characterised in that** it further includes an inorganic filler.

10. Bituminous aggregated-based compound according to claim 8, **characterised in that** said filler is selected from the group consisting of carbonates, silicates and mixtures thereof.

11. Use of a Bituminous aggregated-based compound according to anyone of claims 1-10 for forming the road base course.

12. A process for preparing a bituminous aggregated-based compound comprising the step of:
loading and drying a damp inert stone material into a rotary kiln;
feeding the dried inert stone material into a hopper, adding thereto a bitumen in a liquid state and mixing to provide a homogeneous hot bituminous aggregate;
adding rubber particles having substantially the same size as the loaded inert stone material to said bituminous aggregate and mixing until a homogeneous mixture is obtained; said process being **characterised in that** said rubber particles are added in an amount of less than 10% by weight in respect of the weight of said dried inert stone.

## Patentansprüche

1. Auf einem bituminösen Aggregat beruhende Mischung zum Bilden der Grundschicht einer Straße mit einem bitumengebundenen, inerten Steinmaterial und Gummiteilchen, die im Wesentlichen die gleichen Abmessungen wie das Steinmaterial aufweisen, so dass das Verhältnis von Leerräumen zum Einfüllen des Aggregates im Wesentlichen unverändert bleibt, **dadurch gekennzeichnet, dass** die Gummiteilchen in einer Menge von weniger als 10 Gewichts-% in Bezug auf das Gewicht des inerten Steinmaterials vorgesehen sind, um die physikalischen und mechanischen Eigenschaften zu verbessern.

2. Auf einem bituminösen Aggregat beruhende Mischung nach Anspruch 1, **dadurch gekennzeichnet, dass** die Größe der Gummiteilchen zwischen 10 und 25 mm liegt.

3. Auf einem bituminösen Aggregat beruhende Mischung nach Anspruch 1 oder 2, **dadurch gekennzeichnet, dass** die Gummiteilchen in einer Menge zwischen 2 und 5 Gewichts-% in Bezug auf den Steingewichtsprozentsatz vorgesehen sind.

4. Auf einem bituminösen Aggregat beruhende Mischung nach einem der Ansprüche 1 bis 3, **dadurch gekennzeichnet, dass** die Gummiteilchen in der Form von Granulat vorgesehen sind.

5. Auf einem bituminösen Aggregat beruhende Mischung nach einem der Ansprüche 1 bis 4, **dadurch gekennzeichnet, dass** die Gummiteilchen aus alten Reifen rückgewonnen werden.

6. Auf einem bituminösen Aggregat beruhende Mischung nach einem der Ansprüche 1 bis 5, wobei die entsprechenden granulometrischen Kurven des inerten Steinmaterials und der Gummiteilchen übereinanderlegbar sind.

7. Auf einem bituminösen Aggregat beruhende Mischung nach einem der Ansprüche 1 bis 6, **dadurch gekennzeichnet, dass** das inerte Steinmaterial Kios ist.

8. Auf einem bituminösen Aggregat beruhende Mischung nach einem der Ansprüche 1 bis 7, **dadurch gekennzeichnet, dass** sie ferner Stücke aus zerkleineztem Material enthält.

9. Auf einem bituminösen Aggregat beruhende Mischung nach einem der Ansprüche 1 bis 7, **dadurch gekennzeichnet, dass** sie ferner einen anorganischen Füllstoff enthält.

10. Auf einem bituminösen Aggregat beruhende Mischung nach Anspruch 8, **dadurch gekennzeichnet, dass** der Füllstoff aus der Gruppe ausgewählt ist, die aus Karbonaten, Silikaten und deren Mischungen besteht.

11. Verwendung einer auf einem bituminösen Aggregat beruhenden Mischung nach einem der Ansprüche 1 bis 10 zum Bilden der Grundschicht einer Straße.

12. Verfahren zum Zubereiten einer auf einem bituminösen Aggregat beruhenden Mischung, mit dem Schritt, dass:
ein feuchtes, inertes Steinmaterial in einen Drehofen geladen und getrocknet wird;
das getrocknete, inerte Steinmaterial, in einen Trichter eingespeist wird, diesem ein Bitumen in einem flüssigen Zustand hinzugefügt wird, und gemischt wird, um ein homogenes, heißes bituminöses Aggregat bereitzustellen;
Gummiteilchen, die im Wesentlichen die gleiche Größe wie das geladene, inerte Steinmaterial aufweisen, dem bituminösen Aggregat hinzufügt werden, und gemischt wird, bis ein homogenes Gemisch erhalten wird; wobei das Verfahren **dadurch gekennzeichnet ist, dass** die Gummiteilchen in einer Menge von weniger als 10 Gewichts-% in Bezug auf das Gewicht des getrockneten, inerten Steins hinzugefügt werden.

## Revendications

1. Composé à base d'agrégats bitumineux destiné à la formation d'une couche de fondation routière comprenant un matériau d'empierrement inerte lié au bitume et des particules de caoutchouc ayant sensiblement les mêmes dimensions que ledit matériau d'empierrement de telle sorts que le rapport de vides à combler dans ledit agrégat demeure sensiblement invariable,
**caractérisé en ce que** lesdites particules de caoutchouc sont mises en oeuvre dans une quantité inférieure à 10% en poids par rapport au poids de matériau d'empierrement inerte afin d'améliorer les propriétés physiques et mécaniques.

2. Composé à base d'agrégats bitumineux selon la revendication 1, **caractérisé en ce que** la taille desdites particules de caoutchouc se situe entre 10 et 25 mm.

3. Composé à base d'agrégats bitumineux selon la revendication 1 ou 2, **caractérisé en ce que** lesdites particules de caoutchouc sont mises en oeuvre dans une quantité entre 2 et 5 % en poids par rapport au pourcentage en poids d'empierrement.

4. Composé à base d'agrégats bitumineux selon l'une quelconque des revendications 1-3, **caractérisé en ce que** lesdites particules de caoutchouc sont mises en oeuvre sous la forme de granules.

5. Composé à base d'agrégats bitumineux selon l'une quelconque des revendications 1-4, **caractérisé en ce que** lesdites particules de caoutchouc dont récupérées à partir de pneumatiques usagés.

6. Composé à base d'agrégats bitumineux selon l'une quelconque des revendications 1-5, dans lequel les parcelles granulométriques correspondantes dudit matériau d'empierrement inerte et des particules de caoutchouc sont superposables.

7. Composé à base d'agrégats bitumineux selon l'une quelconque des revendications 1-6, **caractérisé en ce que** ledit matériau d'empierrement inerte est du gravier.

8. Composé & base d'agrégats bitumineux selon l'une quelconque des revendications 1-7, **caractérisé en ce qu'**il comprend de plus des morceaux de matériau déchiqueté.

9. Composé à base d'agrégats bitumineux selon l'une quelconque des revendications 1-7, **caractérisé en ce qu'**il comprend de plus une (matière de) charge inorganique.

10. Composé à base d'agrégats bitumineux selon la revendication 8, **caractérisé en ce que** ladite charge est choisie dans le groupe consistant en carbonates, silicates et leurs mélanges.

11. Utilisation d'un composé à base d'agrégats bitumineux selon l'une quelconque des revendications 1-10 pour former la couche de fondation routière.

12. Procédé pour la préparation d'un composé à base d'agrégats bitumineux, comprenant, les étapes de :
charge et séchage d'un matériau d'empierrement inerte humide dans un four rotatif;
alimentation du matériau d'empierrement inerte séché dans une trémie, ajout à celui-ci d'un bitume à l'état liquide et mélange pour obtenir un agrégat bitumineux chaud homogène;
ajout des particules de caoutchouc ayant sensiblement la même taille que le matériau d'empierrement inerte chargé audit agrégat bitumineux et mélange jusqu'à l'obtention d'un mélange homogène;
ledit procédé étant **caractérisé en ce que** lesdites particules de caoutchouc sont ajoutées dans une quantité inférieure à 10 % en poids par rapport au poids dudit empierrement inerte séché.
